# Europäisches Patentamt

## European Patent Office

## Office européen des brevets

(11) Veröffentlichungsnummer: **0 121 135**
**B1**

(12) **EUROPÄISCHE PATENTSCHRIFT**

(45) Veröffentlichungstag der Patentschrift:
**08.10.86**

(21) Anmeldenummer: **84102402.9**

(22) Anmeldetag: **06.03.84**

(51) Int. Cl.⁴: **G 21 C 17/06**

(54) Vorrichtung zum Nachführen von Kabeln an bewegliche Mess- oder Inspektionsgeräte.

(30) Priorität: **21.03.83 DE 3310105**

(43) Veröffentlichungstag der Anmeldung:
**10.10.84 Patentblatt 84/41**

(45) Bekanntmachung des Hinweises auf die Patenterteilung:
**08.10.86 Patentblatt 86/41**

(84) Benannte Vertragsstaaten:
**BE CH DE FR GB IT LI NL**

(56) Entgegenhaltungen:
**EP - A - 0 033 463**
**DE - A - 2 101 169**
**DE - A - 2 113 277**
**DE - A - 2 127 066**
**FR - A - 2 080 580**
**FR - A - 2 128 556**
**GB - A - 875 376**
**GB - A - 1 029 111**
**US - H - 980 001**

(73) Patentinhaber: **INTERATOM Gesellschaft mit beschränkter Haftung, Friedrich-Ebert-Strasse, D-5060 Bergisch Gladbach 1 (DE)**

(72) Erfinder: **Krüger, Horst, Dipl.-Ing., Strassen 40, D-5060 Bergisch-Gladbach 1 (DE)**
Erfinder: **Endler, Dieter, Lüdorf 6, D-5632 Wermelskirchen 2 (DE)**

(74) Vertreter: **Mehl, Ernst, Dipl.-Ing. et al, Postfach 22 01 76, D-8000 München 22 (DE)**

ACTORUM AG

## Beschreibung

Die vorliegende Erfindung betrifft eine Vorrichtung nach dem Oberbegriff des ersten Anspruchs. Sie wird im folgenden anhand eines Ausführungsbeispieles beschrieben, ist jedoch nicht auf diesen einen Verwendungszweck beschränkt. Die im Inneren von Kernreaktoren durchzuführenden Messungen und Beobachtungen müssen mit Hilfe fernbedienter Geräte durchgeführt werden, so z.B. mit Hilfe fernbedienter Fernsehkameras. Bei flüssigmetallgekühlten Kernreaktoren scheidet diese letztere Möglichkeit wegen der mangelnden Durchsichtigkeit des Kühlmittels und wegen der im allgemeinen höheren Betriebstemperaturen aus. Bereits früher wurden zunächst säulenförmige Geräte entwickelt, die durch eine entsprechende Öffnung im Reaktordeckel in das Innere des Behälters eingebracht wurden und von aussen um eine senkrechte Achse gedreht werden konnten; nach dem Einbringen wurde daraus ein Tastarm in eine annähernd waagerechte Lage ausgeklappt. Mit diesem Tastarm konnte durch azimutales Drehen und ein Anheben bzw. Absenken beispielsweise die Oberseite des Kernverbandes rein mechanisch abgetastet werden, um etwaige Verformungen feststellen zu können. Eine solche Vorrichtung ist in der DE-A-2 101 169 beschrieben. Sie genügt den derzeitigen Anforderungen nicht mehr, kann jedoch dahingehend abgewandelt werden, dass auf dem waagerechten Arm ein Ultraschall-Sichtgerät der in der DE-C-3 003 153 beschriebenen Art verfahrbar ist, mit dessen Hilfe aus der Reflexion von Ultraschall-Wellen nach entsprechender Umwandlung ein dem optischen kaum nachstehendes Bild gewonnen werden kann. Zum Verfahren des Sichtgerätes geeignete Antriebe, die auch in Flüssigmetall eingesetzt werden können, sind z.B. aus der DE-C-2 127 066 bekannt. Für die Versorgung des Sichtgerätes mit elektrischem Strom ist eine Kabelverbindung von wechselnder Länge von diesem zu einer Durchführung im Reaktordeckel erforderlich, an die besondere Anforderungen gestellt werden müssen. So darf das Kabel wegen der Gefahr des Verhakens hinter anderen Behältereinbauten nicht durchhängen. Kabelnachführungen, bei denen das Kabel stets straff gespannt bleibt und der jeweils verbleibende Überschuss etwa auf Trommeln aufgewickelt wird, sind bekannt. Ihre Funktionsfähigkeit in heissem Flüssigmetall erscheint jedoch fraglich und ihre meist mehrere Umlenkungen des Kabels erforderlich machende Konstruktion ist wenig geeignet für die Verwendung in Verbindung mit einem besonders gegen die hier anzutreffende hohe Temperatur und den chemischen Angriff geschütztes Kabel.

Aufgabe der vorliegenden Erfindung ist eine Vorrichtung der beschriebenen Art mit einer einfachen, auch in heissem Flüssigmetall betriebsfähigen Nachführung für das Kabel, die dieses ständig straff hält und mit möglichst wenigen Umlenkungen desselben auskommt.

Die Lösung dieser Aufgabe erfolgt durch die im kennzeichnenden Teil des ersten Anspruchs angegebenen Mittel. Die zwischen den Festpunkten an der ersten und der zweiten Spindelmutter erforderliche Kabellänge bleibt unabhängig von der jeweiligen Position des Mess- oder Inspektionsgerätes gleich; dabei wird das Kabel von jeglicher Zugbelastung freigehalten, da die Übertragung der zum Bewegen des Gerätes erforderlichen Kräfte ausschliesslich über die Spindeln bzw. das sie verbindende Getriebe erfolgt. Der schliessliche Ausgleich der Abstandsänderung zwischen der zweiten Spindelmutter und dem im Reaktordeckel anzunehmenden Festpunkt mittels einer das Kabel tragenden Feder kann in einem Bereich oberhalb des Flüssigmetallspiegels erfolgen, wo bei niedrigerer Temperatur ein leichteres, biegsameres Kabel mehr herkömmlicher Konstruktion Verwendung finden kann.

Soll der waagerechte, das Mess- oder Inspektionsgerät tragende Arm senkrecht in die Säule einklappbar sein, um beide durch eine verhältnismässig kleine Öffnung im Reaktordeckel entfernen zu können, ist die im zweiten Anspruch vorgeschlagene Anordnung der das Kabel von der senkrechten in die waagerechte umlenkenden Rolle einzuhalten, wenn dabei das Auftreten von Zugbelastungen im Kabel vermieden werden soll.

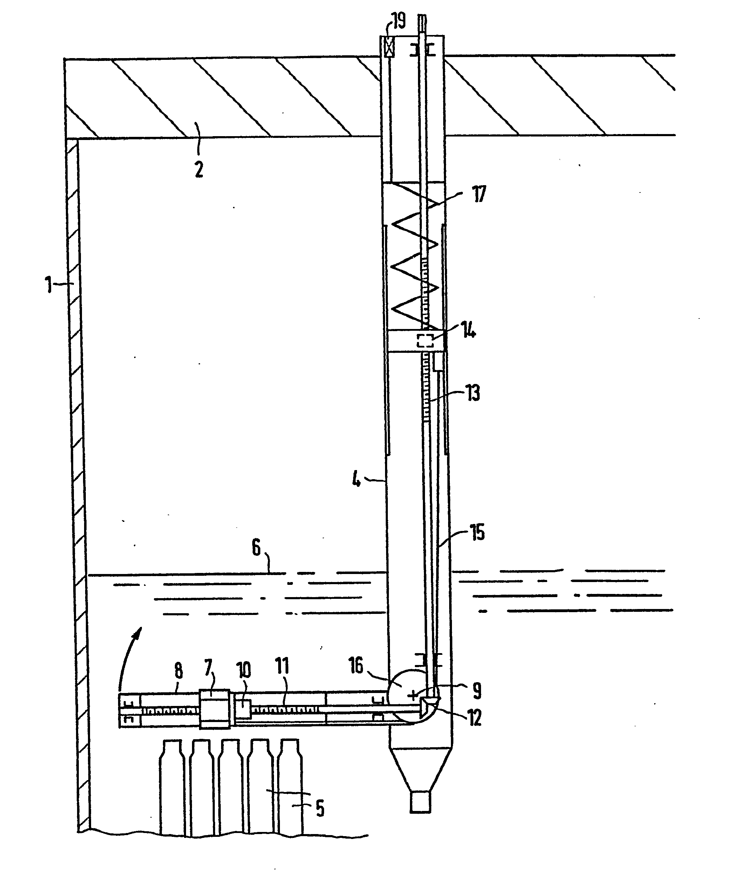

Ein Ausführungsbeispiel der Erfindung ist in vereinfachter Form in der Zeichnung dargestellt, und zwar zeigt diese im Schnitt einen Reaktortank 1, der an seiner Oberseite mit einem Deckel 2 verschlossen ist, der in bekannter Weise aus mehreren ineinander angeordneten und unabhängig voneinander bewegbaren Einzeldeckeln bestehen kann, mit deren Hilfe ein in einer Öffnung im Reaktordeckel senkrecht eingesetzter, säulenförmiger und für sich um die Längsachse drehbarer Ständer 4 in jede beliebige Orientierung in bezug auf die einzelnen Einbauten des Reaktortanks 1 gebracht werden kann, für die hier als Beispiel Brennelemente 5 angedeutet sind. Zum Zwecke ihrer Kühlung sind die Brennelemente 5 bis zu einem Betriebsspiegel 6 mit Flüssigmetall bedeckt, so dass sie der unmittelbaren optischen Beobachtung entzogen sind. Etwaige, z.B. durch neutroneninduziertes Schwellen hervorgerufene Änderungen der Geometrie der Brennelemente 5, auch untereinander, müssen jedoch festgestellt werden können, um bei ihrer Handhabung Beschädigungen vermeiden zu können. Ihre Lage kann jedoch mit Hilfe eines Ultraschall-Sichtgerätes 7 festgestellt werden, das längs eines Auslegers 8 verfahrbar ist, der durch Drehen der Säule 4 in eine beliebige azimutale Orientierung gebracht werden kann. Um den Ein- und Ausbau der genannten Vorrichtung durch die kleine Öffnung im Reaktordeckel 2 zu ermöglichen, kann der Ausleger 8 in der durch den Pfeil angedeuteten Richtung senkrecht in eine zu diesem Zweck vorgesehene, hier nicht dargestellte Aussparung in der Säule 4 geklappt werden und zwar um einen Drehpunkt 9. Das Sichtgerät 7 ist an einer ersten Spindelmutter 10 befestigt, die gegen Verdrehen gesichert auf einer ersten Spindel 11 angebracht ist. Der Antrieb der ersten Spindel 11 geschieht über ein Kegelradgetriebe 12 durch eine zweite Spindel 13, die parallel zur Längsachse der Säule 4 in dieser bis über den Reaktordeckel 2 hinausgeführt ist, von wo aus sie auf beliebige, hier nicht gezeigte Weise in Drehung versetzt werden kann. Auf der zweiten Spindel 13 ist, ebenfalls gegen Verdrehen gesichert, eine zweite, mit der ersten gleichgängige Spindelmutter 14 angebracht.

Zwischen beiden Spindelmuttern ist ein erstes Teil 15 eines Kabels über eine Kabelumlenkrolle 16 geführt. Dieses erste Teil des Kabels ist von besonderer Ausführung, die geeignet ist, den hohen Temperaturen und dem chemischen Angriff des Flüssigmetalls standzuhalten. Werden die Spindeln 11, 13 in Drehung versetzt, bewegen sich die dazugehörigen Spindelmuttern 10, 14 in gleicher Richtung und um das gleiche Mass, so dass das erste Kabelteil 15 unverändert seine Länge beibehalten kann und ohne durchzuhängen oder andererseits Zugbelastungen ausgesetzt zu sein um die Rolle 16 geführt werden kann. Ein zweiter Teil 17 des Kabels ist zwischen der zweiten Spindelmutter 14 und einem nach aussen führenden Kabelstecker 19 auf einem Teil als Kabelfeder 17 ausgeführt, durch die der Längenausgleich zwischen diesen beiden Punkten durchgeführt wird.

Würde die Achse der am Ausleger 8 befestigten Umlenkrolle 16 in den Drehpunkt 9 der letzteren verlegt, würde sich der Längenbedarf des ersteren Kabelteils 15 beim Einklappen des Auslegers um dasjenige Mass erhöhen, das sich aus der dann weitergehenden Umschlingung der Rolle 16 durch das Kabel 15 ergibt. Da ein Recken des Kabels um dieses Mass unerwünscht bzw. unmöglich ist, ist die Achse der Rolle 16 um ein (von dem jeweiligen genauen Ort der Befestigung der Rolle 16 am Ausleger 8, dem Rollendurchmesser usw. abhängiges, mit Hilfe der allgemeinen bekannten Lehren der Geometrie unschwer ohne erfinderisches Dazutun auffindbares) Mass vom Drehpunkt 9 entfernt angeordnet, dass sich die beim Einklappen z.B. durch die Bewegung der Rollenachse in senkrechter Richtung erzielbare Verkürzung der erforderlichen Kabellänge mit der oben angegebenen Verlängerung derselben die Waage hält. In einem ausgeführten Beispiel betrug das Verhältnis Abstand der Rollenachse — Drehpunkt zum Umfang der Rolle 1 : 6,37.

## Patentansprüche

1. Vorrichtung zur Positionierung von Mess- oder Inspektionsgeräten (7) entlang eines waagerechten, von einer gegebenenfalls um ihre Längsachse drehbaren Säule (4) auskragenden Auslegers (8) mit einer Kabelverbindung (15, 17) zwischen dem Messgerät und einer in bezug auf die Säule ortsfesten Anschlussstelle (19), gekennzeichnet durch folgende Merkmale:

a) das Messgerät (7) ist in an sich bekannter Weise mit einer ersten Spindelmutter (10) verbunden, die auf einer ersten, sich in Richtung des Auslegers (8) erstreckenden Spindel (11) drehbar ist, die über ein Kegelradgetriebe (12) durch eine zweite, zur Säule (4) parallele Spindel (13) antreibbar ist,

b) auf der zweiten Spindel (13) ist eine zweite, in bezug auf die Säule (4) unverdrehbare und mit der ersten gleichgängige Spindelmutter (14) drehbar angeordnet,

c) ein erster Teil (15) des Kabels ist an einem Ende an der ersten (10) und am anderen Ende an der zweiten Spindelmutter (14) befestigt und wird über eine Rolle (16) von der waagerechten in die senkrechte Richtung umgelenkt,

d) ein zweiter Teil (17) des Kabels ist am einen Ende am ersten Teil (15) des Kabels und am anderen Ende an der Anschlussstelle (19) befestigt,

e) der zweite Teil (17) des Kabels ist als Schraubenfeder ausgestaltet, die zwischen zweiter Spindelmutter (14) und der Anschlussstelle (19) angeordnet ist.

2. Vorrichtung nach Anspruch 1 mit einem parallel zur Säule (4) klappbaren Ausleger (8), in dem die Umlenkrolle (16) gelagert ist, dadurch gekennzeichnet, dass die Achse der Rolle (16) in einem solchen Abstand vom Drehpunkt (9) des Auslegers (8) angeordnet ist, dass sich die beim Einklappen infolge der Bewegung der Achse auftretende Verkürzung der erforderlichen Kabellänge mit der Verlängerung derselben ausgleicht, die durch die weitergehende Umschlingung der Rolle erforderlich wird.

## Claims

1. Apparatus for the positioning of measuring or inspecting devices (7) along a horizontal arm (8) projecting from a column (4) which is rotatable, if necessary, about is longitudinal axis, with a cable connection (15, 17) between the measuring device and a connecting point (19) which is stationary with respect to the column, characterised by the following features:

a) the measuring device (7) is connected in known manner to a first spindle nut (10) which is rotatable on a first spindle (11) which extends in the direction of the arm (8) and can be driven by a second spindle (13) parallel to the column (4) through a bevel gear (12),

b) a second spindle nut (13) which cannot be rotated in relation to the column (4) and has the same thread as the first one, is rotatably arranged on the second spindle (13),

c) a first part (15) of the cable is secured at one end to the first spindle nut (10) and, at the other end, to the second spindle nut (14) and is guided from the horizontal into the vertical direction by means of a roller (16),

d) a second section (17) of the cable is secured to the first section (15) of the cable at one end and to the connecting point (19) at the other end,

e) the second section (17) of the cable in the form of a helical spring arranged between the second spindle nut (14) and the connecting point (19).

2. Apparatus as claimed in Claim 1 having an arm (8) which can be folded parallel to the column (4) and in which the guide roller (16) is mounted, characterised in that the axis of the roller (16) is arranged at such a distance from the point of rotation (9) of the arm (8), that the shortening of the required cable length which occurs during retraction as a result of the movement of the axis, is compensated by the increase in said cable length required by the continuing winding-on of the roller.

## Revendications

1. Dispositif pour positionner des appareils de mesure ou d'inspection (7) le long d'un bras en console horizontal (8) qui est disposé en saillie par rapport à une colonne (4) pouvant éventuellement tourner autour de cet axe longitudinal, une liaison câblée (15, 17) étant prévue entre l'appareil de mesure et un point de raccordement (19) qui est fixe par rapport à la colonne, remarquable par les caractéristiques suivantes:

a) l'appareil de mesure (7) est relié de façon connue en soi à un premier écrou de broche (12) qui peut tourner sur une première broche (11) s'étendant suivant la direction du bras en console (8) et qui peut être entraîné par l'intermédiaire d'un engrenage à pignons coniques (12) par une seconde broche (13) parallèle à la colonne (4),

b) un second écrou de broche (14) bloqué en rotation par rapport à la colonne (4) et possédant le même pas de vis que le premier écrou de broche, est monté de façon à pouvoir pivoter sur la seconde broche (13),

c) une première partie (15) du câble est fixée, au niveau d'une extrémité, sur le premier écrou de broche (10), et au niveau de l'autre extrémité, sur le second écrou de broche (14) et est renvoyée par l'intermédiaire d'un galet (16) depuis la direction horizontale dans la direction verticale,

d) une seconde partie (17) du câble est fixée, au niveau d'une extrémité, sur la première partie (15) du câble et, au niveau de l'autre extrémité, au point de raccordement (19),

e) la seconde partie (17) du câble est réalisée sous la forme d'un ressort hélicoïdal qui est disposé entre le second écrou de broche (14) et le point de raccordement (19).

2. Dispositif suivant la revendication 1, comportant un bras en console (8) pouvant être rabattu parallèlement à la colonne (4) et dans lequel le galet de renvoi (16) est tourillonné, caractérisé par le fait que l'axe du galet (16) est à une distance telle du centre de rotation (9) du bras en console (8) que le raccourcissement, qui apparaît par suite du déplacement de l'axe par rabattement, de la longueur nécessaire de câble est compensé par l'allongement de cette dernière, qui est nécessité par l'enroulement plus étendu autour du galet.